# FASCICULE DE BREVET EUROPEEN

(11) **EP 2 442 958 B1**
(45) Date de publication et mention de la délivrance du brevet: **22.01.2014**
(21) Numéro de dépôt: 10726065.5
(22) Date de dépôt: 17.06.2010
(51) Int. Cl.: B29C 45/27

(54) **BUSE ET SYSTEME D'INJECTION DE MATIERE THERMOPLASTIQUE**
EINSPRITZDÜSE FÜR KUNSTSTOFFEVERARBEITUNG
INJECTION NOZZLE FOR PLASTIC PROCESSING

(30) Priorité: 17.06.2009 FR 0954065
(43) Date de publication de la demande: 25.04.2012
(73) Titulaire: RUNIPSYS EUROPE, 73420 Mery (FR)
(72) Inventeur: DERICHE, Eric, F-73420 Mery (FR)
(74) Mandataire: Regimbeau
(86) Numéro de dépôt international: PCT/EP2010/058556
(87) Numéro de publication internationale: WO 2010/146124

(56) Documents cités:
- EP-A2- 1 447 199
- WO-A1-2009/097303
- US-A- 5 162 125
- US-A1- 2005 238 748

## Description

### DOMAINE DE L'INVENTION

La présente invention concerne une buse et un système d'injection d'une matière thermoplastique à l'état fluide dans une empreinte de moulage, comme décrit dans le document EP 1 447 199.

### ARRIERE PLAN DE L'INVENTION

Un système d'injection de type « bloc chaud » ou « à canaux chauds » comporte habituellement :
- une matrice rigide, présentant une face avant délimitant partiellement l'empreinte de moulage, une face arrière et au moins un passage longitudinal traversant la matrice de sa face arrière à sa face avant,
- une buse longitudinale d'injection, disposée coaxialement à l'intérieur dudit passage, et comportant un canal longitudinal,
- un distributeur d'alimentation du canal de la buse en matière thermoplastique à l'état fluide, situé en arrière de la face arrière de la matrice et relié mécaniquement à celle-ci, ledit distributeur comportant un canal longitudinal d'alimentation débouchant vers l'avant en relation fluidique avec le canal longitudinal de la buse. Le document US 2005 0238748 décrit une buse d'injection ayant les caractéristiques du préambule de la revendication 1.

Ce type de système d'injection comporte en outre des moyens d'alimentation aptes à pourvoir le distributeur en matière à injecter.

Pour injecter de manière satisfaisante la matière dans l'empreinte, la matière doit être maintenue à l'état fluide, cet état étant obtenu lorsque la matière est portée à une température limite déterminée, supérieure à la température de l'air ambiant.

A cet effet, le distributeur comporte de manière connue des moyens permettant de maintenir sa température, et par conséquent celle de la matière transitant dans son canal de distribution, à une température dite « température d'injection » supérieure à la température limite de passage à l'état fluide de la matière.

La matière à l'état fluide est introduite dans le canal de distribution du distributeur par les moyens d'alimentation et pénètre dans le passage de transit de la buse d'injection.

La buse d'injection est également pourvue de moyens de chauffage, qui consistent typiquement en une résistance électrique enroulée autour de la buse.

Il est par ailleurs nécessaire d'assurer l'étanchéité de la buse à la fois à son extrémité arrière, vis-à-vis du distributeur et, à son extrémité avant, vis-à-vis de la face avant de la matrice.

Les moyens existants pour assurer l'étanchéité aux deux extrémités de la buse ne donnent toutefois pas entière satisfaction.

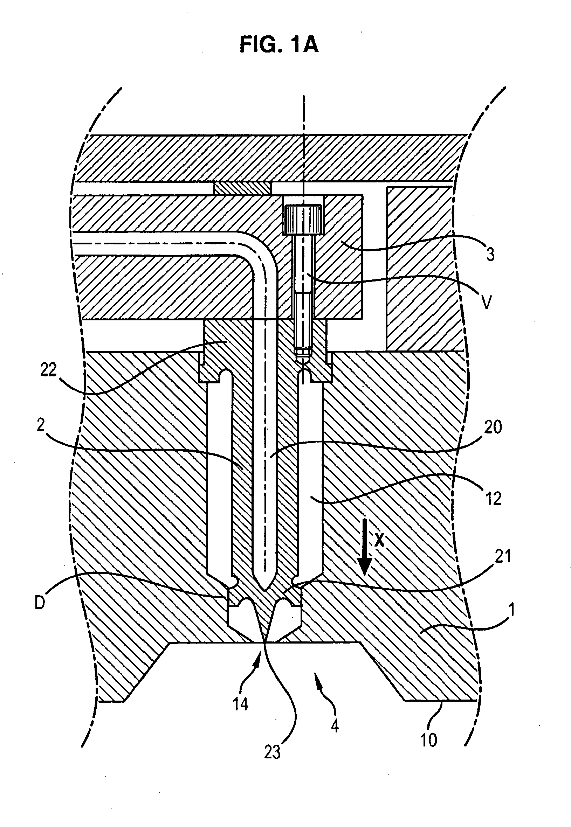

Les figures 1A à 1C illustrent trois modes répandus de fixation de la buse d'injection.

Dans ces trois systèmes, l'étanchéité de l'extrémité avant de la buse 2 vis-à-vis de la matrice 1 est assurée au niveau du diamètre D de la partie avant 21 de la buse.

Dans la configuration de la figure 1A, la buse est fixée sur le distributeur 3 par son extrémité arrière 22 au moyen d'une vis V.

Lors des variations de température du système d'injection, le distributeur 3 se dilate transversalement, dans la mesure de la flexibilité des vis V.

Par ailleurs, la buse peut fléchir légèrement sans pour autant compromettre l'étanchéité au niveau du diamètre D.

La buse 2 peut quant à elle se dilater longitudinalement dans la direction X, en coulissant le long du diamètre D.

Il en résulte que la position de la pointe 23 de la buse par rapport à l'orifice 14 prévu dans la matrice peut varier en fonction de la dilatation de la buse.

Notamment, dans le cas de petits seuils d'injection (le seuil d'injection étant le passage à travers lequel la matière thermoplastique passe de la buse dans l'empreinte), il peut se produire un bouchage ou un déséquilibrage du seuil d'injection.

Or, si l'on chauffe davantage la matière pour la fluidifier, la buse se dilate d'autant plus et tend à fermer encore davantage le seuil d'injection.

Un tel système est donc particulièrement difficile à régler.

En outre, dans le cas d'un système multi-empreintes, les buses peuvent se dilater différemment et il en résulte alors une grande hétérogénéité du remplissage des empreintes.

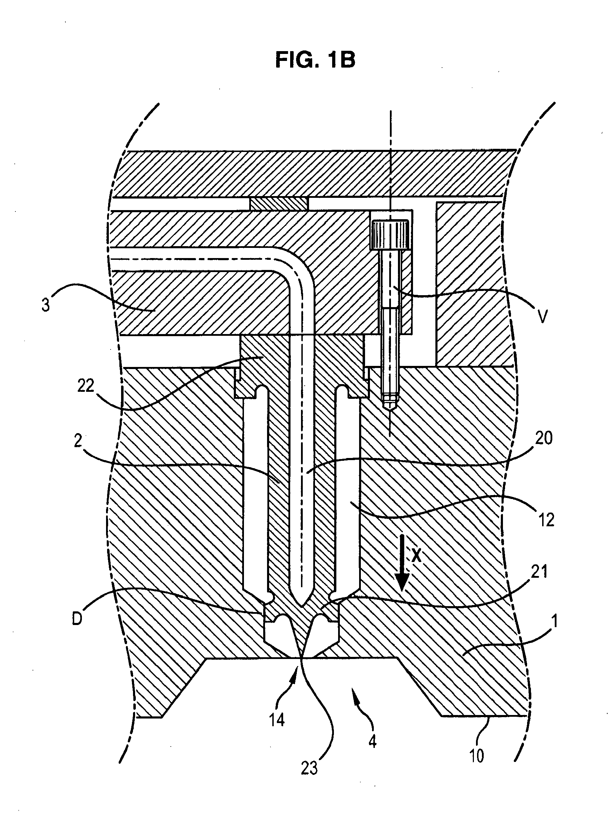

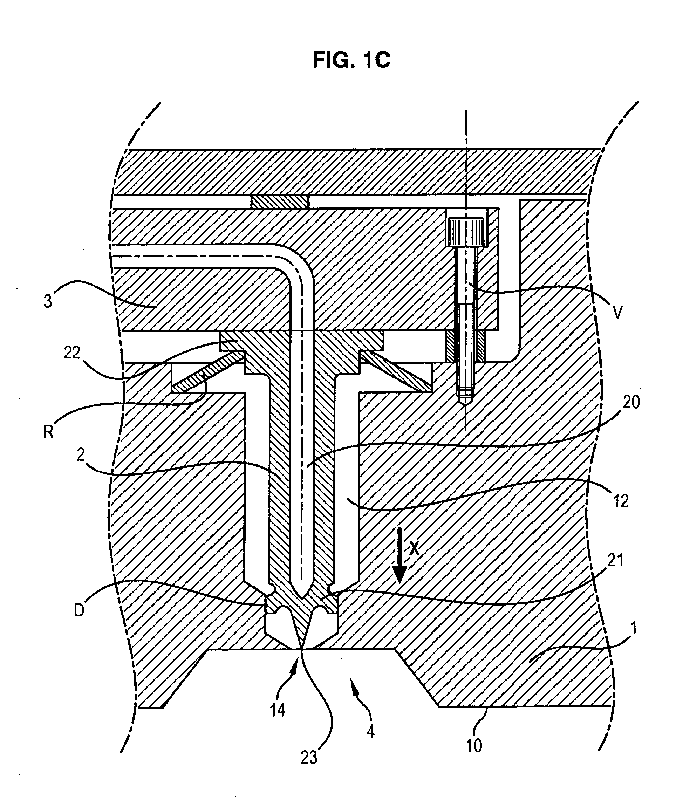

Ces problèmes se produisent également dans le système de la figure 1B, où le distributeur 3 est fixé sur la matrice 1 au moyen de vis V (dont une seule est représentée ici) et dans le système de la figure 1C, où une rondelle élastique R sollicite l'extrémité arrière 22 de la buse vers le distributeur 3.

Dans tous ces cas, la dimension du seuil d'injection est donc dépendante de la température du système.

Un autre système est décrit dans le document WO 2007/051857.

Dans celui-ci, la buse repose en appui à plat sur une bague incompressible.

Pour compenser les dilatations thermiques de la buse, la partie arrière de la buse est mobile en coulissement à l'intérieur du distributeur.

Un disque élastique sollicite la partie avant de la buse sur la bague incompressible.

Toutefois, en raison des fortes variations de température du distributeur, on observe également une dilatation du distributeur dans une direction transversale, c'est-à-dire perpendiculaire à l'axe de la buse.

En se dilatant transversalement, le distributeur entraîne la partie arrière de la buse qui est logée dans celui-ci, provoquant un fléchissement de la buse.

Or, ce fléchissement, surtout si la buse est courte, provoque une perte de l'appui à plat de sa face avant, et par conséquent une perte d'étanchéité. L'étanchéité à plat est en effet beaucoup plus sensible que l'étanchéité sur le diamètre.

Par ailleurs, le disque élastique crée un pont thermique qui refroidit localement la matière circulant dans la buse.

En outre, la bague incompressible est soumise à des efforts de cisaillement qui lui sont préjudiciables.

On cherche donc à concevoir un moyen pour assurer l'étanchéité aux deux extrémités de la buse tout en évitant les problèmes précités.

Notamment, le système d'injection doit permettre à la fois d'obtenir un positionnement précis et répétable de l'extrémité de la buse et de tolérer les dilatations thermiques des différents composants du système d'injection, et notamment la dilatation transversale du distributeur.

### BREVE DESCRIPTION DE L'INVENTION

Conformément à l'invention, il est proposé une buse d'injection de matière thermoplastique à l'état fluide comprenant deux parties à coulissement étanche l'une vis-à-vis de l'autre,
- la première partie comprenant un corps de buse présentant, selon une direction d'injection longitudinale, un canal longitudinal pour le passage de la matière thermoplastique,
- la deuxième partie comprenant une bague de liaison possédant un passage dans lequel le corps de buse peut coulisser de façon étanche,
et un moyen élastique de sollicitation coopérant avec les deux parties pour solliciter le corps de buse dans la direction longitudinale vers l'avant et la bague de liaison dans la direction longitudinale vers l'arrière.

De manière avantageuse, ledit moyen élastique de sollicitation comprend un premier organe élastique agencé de sorte à solliciter la bague de liaison vers l'arrière, un deuxième organe élastique agencé de sorte à solliciter le corps de buse vers l'avant, et le deuxième organe élastique est agencé entre la bague de liaison et un élément d'appui solidaire du corps de buse.

Un autre objet de l'invention concerne un système d'injection d'une matière thermoplastique à l'état fluide dans une empreinte de moulage, comprenant, en référence à une direction d'injection longitudinale :
- une matrice rigide, présentant une face avant délimitant partiellement l'empreinte de moulage, une face arrière et au moins un passage longitudinal traversant la matrice de sa face arrière à sa face avant,
- une buse longitudinale d'injection, disposée coaxialement à l'intérieur dudit passage, et comportant un canal longitudinal,
- un distributeur d'alimentation du canal de la buse en matière thermoplastique à l'état fluide, situé en arrière de la face arrière de la matrice et relié mécaniquement à celle-ci, ledit distributeur comportant un canal longitudinal d'alimentation débouchant vers l'avant.

Ce système est caractérisé en ce que la buse comprend deux parties à coulissement étanche l'une vis-à-vis de l'autre :
- la première partie comprenant un corps de buse dont une région avant repose en appui sur la matrice,
- la deuxième partie comprenant une bague de liaison possédant un passage dans lequel le corps de buse peut coulisser de façon étanche et comprenant une face arrière en contact glissant contre la face avant du distributeur,
et un moyen élastique de sollicitation coopérant avec les deux parties pour solliciter le corps de buse dans la direction longitudinale vers l'avant et la bague de liaison dans la direction longitudinale vers l'arrière.

De préférence, l'extrémité avant de la buse repose en appui à plat par un épaulement contre une bague annulaire d'étanchéité.

Selon un mode préféré de réalisation de l'invention, ledit moyen élastique de sollicitation comprend :
- un premier organe élastique agencé entre la face arrière de la matrice et la bague de liaison de sorte à assurer sur ladite bague de liaison une réaction longitudinale vers l'arrière,
- une rondelle d'appui rigidement liée au corps de buse,
- un deuxième organe élastique agencé entre ladite bague de liaison et la rondelle d'appui, de sorte à assurer sur ladite rondelle d'appui une réaction longitudinale vers l'avant.

De manière particulièrement avantageuse, à température ambiante, l'axe du canal du distributeur est décalé transversalement par rapport à l'axe du canal de la buse, d'une distance sensiblement égale à la dilatation transversale du distributeur lorsqu'il est porté de la température ambiante à la température d'injection, de telle sorte que, lors de l'injection, les canaux du distributeur et de la buse soient coaxiaux,

### BREVE DESCRIPTION DES DESSINS

D'autres caractéristiques et avantages de l'invention ressortiront de la description détaillée qui va suivre, en référence aux dessins annexés sur lesquels :
- les figures 1A à 1C illustrent trois modes de fixation conventionnels d'une buse d'injection,
- la figure 2 est une vue d'ensemble du système d'injection conforme à l'invention,
- la figure 3 est une vue de détail de l'appui de l'avant de la buse contre la bague d'étanchéité,
- la figure 4 est une vue de détail du moyen élastique de sollicitation de l'arrière de la buse, selon un premier mode de réalisation de l'invention,
- la figure 5 est une vue de détail du moyen élastique de sollicitation de l'arrière de la buse conforme à un mode de réalisation préféré de l'invention.

### DESCRIPTION DETAILLEE DE L'INVENTION

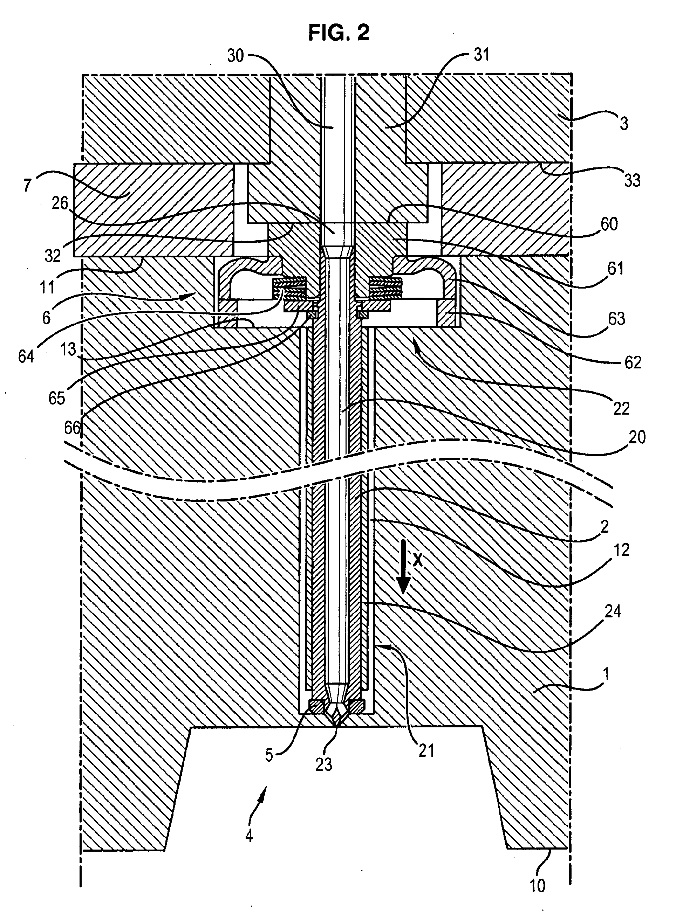

Le système d'injection est illustré à la figure 2.

La flèche X indique la direction longitudinale d'injection, et est orientée de l'arrière vers l'avant du système d'injection dans le sens d'injection.

Le système d'injection comprend, de manière connue, une matrice 1 rigide qui présente une face avant 10 qui délimite partiellement l'empreinte de moulage 4.

La matrice 1 présente par ailleurs une face arrière 11 opposée à la face avant 10.

La matrice 1 est traversée, de sa face arrière 11 à sa face avant 10, d'au moins un passage longitudinal 12 pour loger une buse d'injection.

Il va de soi que la matrice 1 peut comprendre plusieurs passages longitudinaux 12 pour le logement de plusieurs buses d'injection, lesdites buses étant susceptibles d'alimenter une même empreinte ou plusieurs empreintes distinctes.

Par ailleurs, la matrice 1 ne forme pas nécessairement un bloc unique, mais peut être constituée d'un empilement de plusieurs plaques.

Ces variantes sont connues de l'homme du métier et ne seront donc pas décrites de manière détaillée.

Le système d'injection comporte par ailleurs au moins une buse longitudinale d'injection, disposée coaxialement à l'intérieur du passage 12 de la matrice 1.

La buse d'injection comprend deux parties 2, 61 agencées à coulissement étanche l'une vis-à-vis de l'autre.

Une première partie de la buse comprend un corps de buse 2 qui comporte intérieurement un canal longitudinal 20 pour le passage de la matière thermoplastique à l'état fluide, qui débouche, dans la partie avant 21 de la buse, dans l'empreinte 4 à travers un orifice d'injection 14.

La buse d'injection comporte également des moyens de chauffage pour maintenir la matière thermoplastique circulant dans le canal longitudinal 20 à la température d'injection adéquate.

Ces moyens de chauffage sont en eux-mêmes connus de l'homme du métier et un mode de réalisation particulièrement avantageux sera décrit plus bas de manière détaillée.

Le système d'injection comporte en outre un distributeur 3 d'alimentation du canal longitudinal 20 de la buse en matière thermoplastique à l'état fluide.

Le distributeur 3 est situé en arrière de la face arrière 11 de la matrice 1 et est relié mécaniquement à celle-ci.

Le distributeur 3 comporte un réseau intérieur de canaux d'alimentation, reliés à un canal longitudinal d'alimentation 30 débouchant vers l'avant du distributeur 3 de sorte à venir en alignement du canal 20 de la buse pour l'alimenter en matériau thermoplastique.

En fonctionnement, c'est-à-dire lorsque le système d'injection est porté à la température d'injection, le canal 20 et le canal 30 sont donc coaxiaux.

En général, le canal 30 du distributeur est réalisé dans un insert 31 solidaire du distributeur 3, et dont la face avant 32 est rectifiée. La face avant 32 de l'insert est généralement située en saillie vers l'avant par rapport à la face avant 33 du distributeur. La face avant 32 est alors considérée comme formant une partie de la face avant 33 du distributeur.

### Bague annulaire d'étanchéité

Dans sa partie avant 21, le corps de buse 2 repose contre une bague annulaire d'étanchéité 5 placée dans un logement prévu à cet effet dans la matrice 1.

La bague 5 est réalisée en un matériau incompressible et thermiquement isolant, par exemple en céramique.

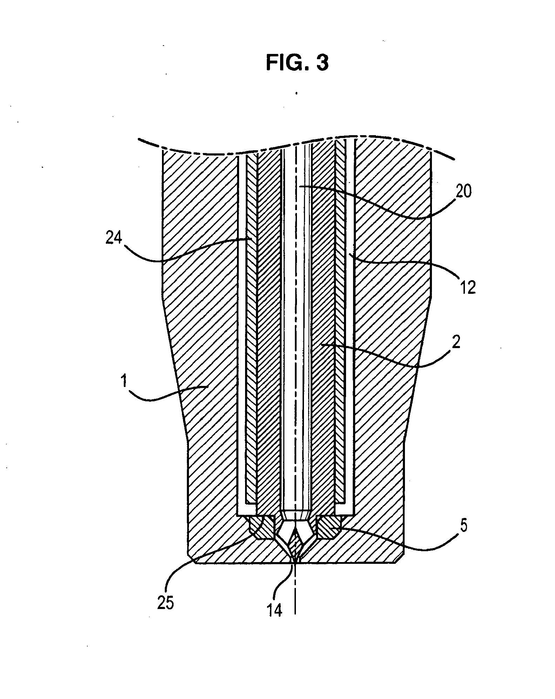

Comme on peut le voir sur la figure 3, le contact entre la partie avant 21 du corps de buse et la bague 5 se fait par un appui à plat, au moyen d'un épaulement 25 de la buse.

La bague 5 repose elle aussi à plat dans son logement de la matrice.

Par rapport aux solutions de l'art antérieur, la bague 5 permet de garantir un positionnement précis, répétable et indépendant de la température de l'orifice de sortie de la buse 2, puisqu'elle est située au plus près de celui-ci.

Par ailleurs, elle n'est soumise qu'à des contraintes de compression.

### Moyen élastique de sollicitation

La buse comprend par ailleurs une deuxième partie qui comprend une bague de liaison 61 possédant un passage 26 dans lequel le corps de buse peut coulisser de façon étanche.

La bague de liaison 61 est agencée dans une zone arrière 22 du corps de buse de telle sorte qu'un coulissement longitudinal relatif soit possible entre le corps de buse 2 et la bague de liaison 61.

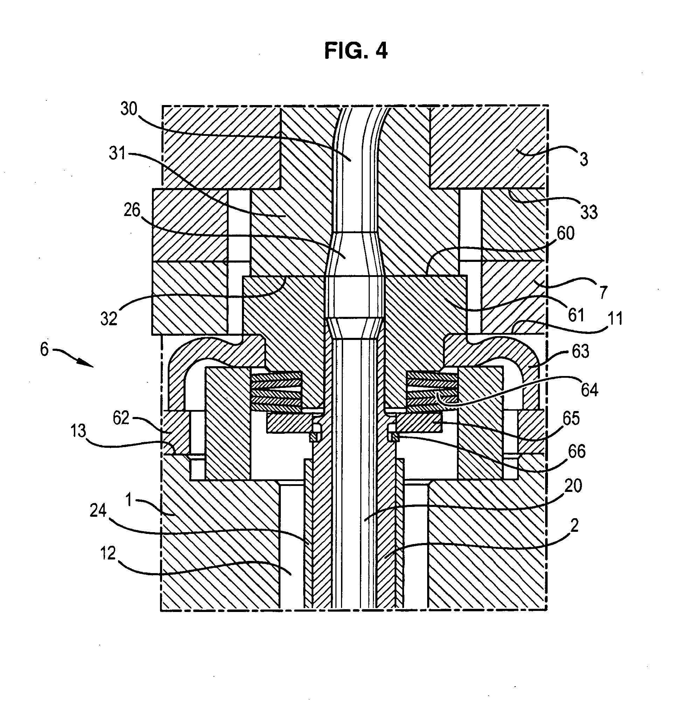

Comme on le verra mieux sur la figure 4, qui illustre un premier mode de réalisation de l'invention, la face arrière 60 de la bague de liaison 61 est en appui contre le distributeur (et plus précisément sur la face avant 32 de l'insert 31), de telle sorte qu'un glissement relatif entre lesdites faces 60 et 32 soit possible.

La buse comprend par ailleurs un moyen élastique de sollicitation 6 qui a pour fonction d'exercer sur le corps de buse 2 un effort longitudinal vers l'avant et sur la bague de liaison 61 un effort longitudinal vers l'arrière pour assurer l'étanchéité respectivement vis-à-vis de la bague d'étanchéité 5 et vis-à-vis du distributeur 3, indépendamment des dilatations du distributeur.

Par ailleurs, le moyen élastique de sollicitation 6 comprend une rondelle d'appui 65 solidaire de la partie arrière 22 du corps de buse, par exemple par encliquetage dans une gorge prévue à cet effet et maintien par un anneau élastique tel qu'un circlip 66. Selon une variante, la rondelle d'appui 65 fait partie intégrante de la buse et est constituée par un épaulement ménagé sur celle-ci.

La bague de liaison 61 est montée sur la partie arrière 22 du corps de buse à l'encontre de la sollicitation, orientée vers l'arrière, d'un premier organe élastique 63 en appui sur la face arrière 11 de la matrice 1, et plus précisément contre le fond 13 d'un logement réalisé sur la face arrière 11 de la matrice. Le fond 13 est considéré comme formant une partie de la face arrière 11 de la matrice.

Ce premier organe élastique 63 se présente par exemple sous la forme d'une rondelle élastique telle qu'une rondelle « Belleville », disposée en appui sur une rondelle 62.

La fonction de ce premier organe élastique 63 est donc de plaquer la bague de liaison 61 contre le distributeur. Il maintient ainsi un contact glissant entre la face arrière 60 de la bague de liaison et la face avant 32 du distributeur.

Le moyen élastique de sollicitation 6 comporte par ailleurs un deuxième organe élastique 64, agencé entre la rondelle d'appui 65 et la bague de liaison 61.

Ce deuxième organe élastique 64, qui se présente par exemple sous la forme d'un ressort, exerce sur la rondelle d'appui 65 un effort longitudinal vers l'avant.

Ainsi, la fonction de ce deuxième organe élastique est de solliciter la partie avant 21 du corps de buse 2 contre la bague d'étanchéité 5.

Le moyen élastique de sollicitation permet donc d'assurer une sollicitation des deux extrémités de la buse respectivement contre la bague d'étanchéité et contre la face avant du distributeur.

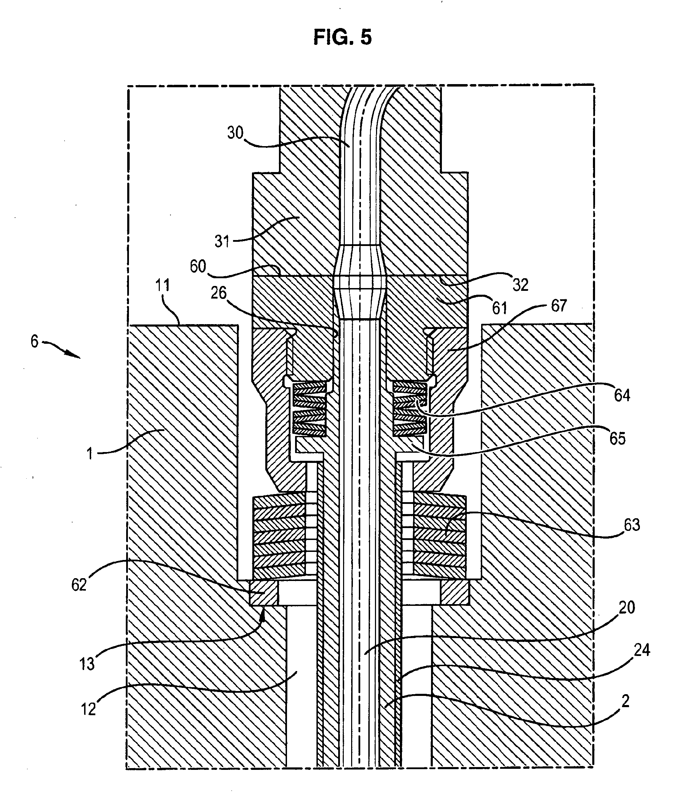

La figure 5 illustre un mode de réalisation préféré de l'invention.

Dans celui-ci, un écrou 67 vissé sur la bague de liaison 61 entoure également le deuxième organe élastique 64 disposé entre la face avant de la bague de liaison 61 et l'épaulement 65 ménagé sur le corps de buse 2. Le deuxième organe élastique 64 sollicite donc la buse vers l'avant.

Par ailleurs, le premier organe élastique 63 repose en appui contre le fond 13 d'un logement réalisé sur la face arrière 11 de la matrice. De manière particulièrement avantageuse, une rondelle 62 réalisée en un matériau incompressible et thermiquement isolant est intercalée entre le fond 13 et le premier organe élastique 63, de manière à éviter tout pont thermique entre celui-ci et la matrice 1.

Le premier organe élastique 63 sollicite l'écrou 67, et donc la bague de liaison 61, vers l'arrière contre la face avant du distributeur.

Ce mode de réalisation présente l'avantage de simplifier les opérations de maintenance, puisque lorsque l'on démonte la buse d'injection, l'ensemble des composants du moyen élastique de sollicitation reste emprisonné dans l'écrou 67.

On comprend que le moyen élastique de sollicitation peut être utilisé que le système d'injection soit soumis à des contraintes de dilatation ou non.

En effet, même lorsque le système est à température ambiante, le moyen élastique de sollicitation exerce un effort de « précontrainte » sur la buse.

Il est toutefois particulièrement avantageux pour assurer l'étanchéité aux deux extrémités de la buse lorsque les différents composants du système sont soumis à des dilatations thermiques.

En effet, lorsque le distributeur se dilate dans une direction transversale perpendiculaire à la direction longitudinale d'injection, il glisse sur la face arrière 60 de la bague de liaison 61.

Il n'occasionne ainsi aucun fléchissement de la buse, ce qui garantit le maintien de l'appui à plat contre la bague 5, et par conséquent l'étanchéité à ce niveau.

Par ailleurs, lorsque le corps de buse 2 se dilate longitudinalement, l'effort exercé par le deuxième organe élastique 64 augmente, ce qui a pour effet de renforcer la sollicitation de la partie avant de la buse.

Ainsi, le coulissement étanche des deux parties de la buse permet d'absorber les dilatations thermiques de celle-ci.

Le dimensionnement du système d'injection doit alors tenir compte des dilatations respectives des différents composants lors du passage de la température ambiante à la température d'injection.

Notamment, puisque le distributeur 3 tend à se dilater dans une direction transversale, perpendiculaire à la direction longitudinale, le canal longitudinal 30 du distributeur doit être situé, à température ambiante, légèrement décalé du canal 20 de la buse.

Le décalage entre les axes des canaux 20 et 30 doit correspondre à la dilatation que subira le distributeur (c'est-à-dire la distance de laquelle se déplacera l'axe du canal 30), de sorte qu'à la température d'injection, les axes des canaux 20 et 30 soient alignés.

La détermination de ce décalage est à la portée de l'homme du métier en fonction du matériau employé, des dimensions du distributeur et de l'emplacement où se trouve la buse considérée.

Typiquement, le décalage est de l'ordre quelques centièmes de mm à quelques mm.

### Dispositif de chauffage de la buse d'injection

Pour maintenir la matière plastique à la température souhaitée dans le canal longitudinal 20 de la buse, celle-ci comporte des moyens de chauffage.

De manière préférée, les moyens de chauffage consistent en un manchon chauffant 24 entourant le corps de buse 2 sur sensiblement toute sa hauteur.

De manière connue en elle-même, le manchon chauffant comporte une résistance électrique qui est par exemple réalisée par sérigraphie.

La résistance électrique est reliée à des plages électriquement conductrices (non représentées) destinées à être mises en contact avec des moyens (non illustrés) d'alimentation en électricité (par exemple des lames conductrices) agencés sur la matrice 1.

De manière particulièrement avantageuse, la connexion de la résistance électrique aux lames de contact situées sur la matrice est effectuée au moyen du dispositif décrit dans le document WO 2007/006899.

On rappelle brièvement que, dans ce dispositif, une pluralité de plages électriquement conductrices sont situées dans la partie arrière du manchon, c'est-à-dire au niveau de la partie arrière du corps de buse.

Le manchon comporte par ailleurs un moyen d'indexation (par exemple une encoche longitudinale) par rapport à laquelle les plages électriquement conductrices sont disposées selon une position angulaire déterminée.

Par ailleurs, la matrice comporte un moyen adapté pour coopérer avec le moyen d'indexation et les plages électriquement conductrices. De préférence, ce moyen est constitué par une bague annulaire en matériau électriquement isolant, insérée de manière amovible à l'intérieur d'une gorge aménagée autour du passage longitudinal 12 de la buse d'injection, au niveau de la partie arrière de celle-ci.

La bague annulaire supporte des lames conductrices dont une extrémité est reliée à un connecteur électrique agencé dans la matrice et l'autre extrémité est destinée à assurer le contact électrique avec une plage électriquement conductrice du manchon chauffant.

La bague annulaire est positionnée selon une orientation déterminée par rapport à la matrice.

La bague annulaire comporte par ailleurs un moyen d'indexation (par exemple un doigt) apte à coopérer avec le moyen d'indexation du manchon chauffant, de sorte que le contact électrique entre les plages électriquement conductrices et les lames ne puisse s'établir que lorsque le manchon chauffant est mis en place selon l'orientation voulue.

Ce dispositif permet en outre de simplifier les opérations de maintenance et notamment de remplacement du manchon chauffant.

Naturellement, on pourra utiliser tout autre moyen de chauffage - voire aucun moyen de chauffage - sans pour autant sortir du cadre de la présente invention.

La conception du système conforme à l'invention présente donc l'avantage de permettre l'emploi de buses de très petites dimensions, et notamment de petit diamètre.

Il est ainsi possible d'injecter une pièce concave (par exemple un bouchon) par l'intérieur, c'est-à-dire sur une face non visible, ce qui améliore l'esthétique de la pièce moulée.

Par ailleurs, ce système est optimisé sur le plan thermique, puisque l'on évite tous ponts thermiques qui risqueraient de refroidir localement la matière.

Ainsi, la bague de liaison 61 est chauffée par contact avec le distributeur. Le corps de buse est chauffé grâce au manchon 24, sur sensiblement toute sa hauteur, de la rondelle d'appui 65 jusqu'à la bague d'étanchéité 5, qui est située à proximité du point d'injection. Enfin, la rondelle 62 est réalisée en matériau incompressible et isolant thermiquement.

## Revendications

1. Buse d'injection de matière thermoplastique à l'état fluide comprenant deux parties à coulissement étanche l'une vis-à-vis de l'autre,
- la première partie comprenant un corps de buse (2) présentant, selon une direction (X) d'injection longitudinale, un canal longitudinal (20) pour le passage de la matière thermoplastique,
- la deuxième partie comprenant une bague de liaison (61) possédant un passage (26) dans lequel le corps de buse peut coulisser de façon étanche,
et un moyen élastique de sollicitation (6) coopérant avec les deux parties pour solliciter le corps de buse (2) dans la direction longitudinale (X) vers l'avant et la bague de liaison (61) dans la direction longitudinale (X) vers l'arrière, ledit moyen élastique de sollicitation (6) comprenant :
- un premier organe élastique (63) agencé de sorte à solliciter la bague de liaison (61) vers l'arrière, et
- un deuxième organe élastique (64) agencé de sorte à solliciter le corps de buse (2) vers l'avant, ledit deuxième organe élastique (64) étant agencé entre la bague de liaison (61) et un élément d'appui (65) solidaire du corps de buse (2),
ladite buse d'injection étant **caractérisée en ce qu'**elle comprend un écrou (67) vissé sur la bague de liaison (61) en entourant le deuxième organe élastique (64), ledit écrou (67) étant sollicité vers l'arrière par le premier organe élastique (63).

2. Système d'injection d'une matière thermoplastique à l'état fluide dans une empreinte de moulage, comprenant, en référence à une direction longitudinale (X) d'injection :
• une matrice (1) rigide, présentant une face avant (10) délimitant partiellement l'empreinte de moulage (4), une face arrière (11) et au moins un passage longitudinal (12) traversant la matrice de sa face arrière (11) à sa face avant (10),
• une buse longitudinale d'injection, disposée coaxialement à l'intérieur dudit passage (12), et comportant un canal longitudinal (20),
• un distributeur (3) d'alimentation du canal (20) de la buse en matière thermoplastique à l'état fluide, situé en arrière de la face arrière (11) de la matrice (1) et relié mécaniquement à celle-ci, ledit distributeur (3) comportant un canal longitudinal d'alimentation (30) débouchant vers l'avant,
la buse comprenant deux parties à coulissement étanche l'une vis-à-vis de l'autre :
- la première partie comprenant un corps de buse (2) dont une région avant (21) repose en appui sur la matrice (1),
- la deuxième partie comprenant une bague de liaison (61) possédant un passage (26) dans lequel le corps de buse (2) peut coulisser de façon étanche et comprenant une face arrière (60) en contact glissant contre la face avant du distributeur,
et un moyen élastique de sollicitation (6) coopérant avec les deux parties pour solliciter le corps de buse (2) dans la direction longitudinale (X) vers l'avant et la bague de liaison (61) dans la direction longitudinale (X) vers l'arrière, ledit moyen élastique de sollicitation (6) comprenant :
- un premier organe élastique (63) agencé de sorte à solliciter la bague de liaison (61) vers l'arrière, et
- un deuxième organe élastique (64) agencé de sorte à solliciter le corps de buse (2) vers l'avant, ledit deuxième organe élastique (64) étant agencé entre la bague de liaison (61) et un élément d'appui (65) solidaire du corps de buse (2),
ledit système étant **caractérisé en ce que** la buse d'injection comprend un écrou (67) vissé sur la bague de liaison (61) en entourant le deuxième organe élastique (64), ledit écrou (67) étant sollicité vers l'arrière par le premier organe élastique (63).

3. Système selon la revendication 2, **caractérisé en ce que** l'extrémité avant (21) de la buse repose en appui à plat par un épaulement (25) contre une bague annulaire d'étanchéité (5).

4. Système selon l'une des revendications 2 ou 3, dans lequel :
• le premier organe élastique (63) est agencé entre la face arrière (11) de la matrice (1) et la bague de liaison (61) de sorte à assurer sur ladite bague de liaison (61) une réaction longitudinale vers l'arrière,
• l'élément d'appui (65) est une rondelle d'appui (65) rigidement liée au corps de buse (2),
• le deuxième organe élastique (64) est agencé entre ladite bague de liaison (61) et la rondelle d'appui (65), de sorte à assurer sur ladite rondelle d'appui (65) une réaction longitudinale vers l'avant.

5. Système selon l'une des revendications 2 à 4, **caractérisé en ce qu'**à température ambiante, l'axe du canal (30) du distributeur est décalé transversalement par rapport à l'axe du canal (20) de la buse, d'une distance sensiblement égale à la dilatation transversale du distributeur lorsqu'il est porté de la température ambiante à la température d'injection, de telle sorte que, lors de l'injection, les canaux (30, 20) du distributeur (3) et de la buse (2) soient coaxiaux.

## Patentansprüche

1. Einspritzdüse zum Einspritzen von thermoplastischem Material im fließfähigen Zustand, enthaltend zwei Teile, die in dichter Weise gleitbeweglich zueinander sind,
- wobei das erste Teil einen Düsenkörper (2) aufweist, der in einer Einspritzlängsrichtung (X) einen longitudinalen Kanal (20) für den Durchtritt von thermoplastischem Material aufweist,
- wobei das zweite Teil einen Verbindungsring (61) aufweist, der einen Durchgang (26) besitzt, in welchem der Düsenkörper in dichter Weise gleiten kann,
und ein elastisches Beaufschlagungsmittel (6), das mit den beiden Teilen zusammenwirkt, um den Düsenkörper (2) in Längsrichtung (X) nach vorne und den Verbindungsring (61) in Längsrichtung (X) nach hinten zu beaufschlagen, wobei das elastische Beaufschlagungsmittel (6) aufweist:
- ein erstes elastisches Glied (63), das so angeordnet ist, dass es den Verbindungsring (61) nach hinten beaufschlagt, und
- ein zweites elastisches Glied (64), das so angeordnet ist, dass es den Düsenkörper (2) nach vorne beaufschlagt, wobei das zweite elastische Glied (64) zwischen dem Verbindungsring (61) und einem fest mit dem Düsenkörper (2) verbundenen Abstützelement (65) angeordnet ist,
wobei die Einspritzdüse **dadurch gekennzeichnet ist, dass** sie eine Mutter (67) aufweist, die auf den Verbindungsring (61) aufgeschraubt ist und dabei das zweite elastische Glied (64) umgibt, wobei die Mutter (67) von dem ersten elastischen Glied (63) nach hinten beaufschlagt wird.

2. Einspritzsystem zum Einspritzen von thermoplastischem Material im fließfähigen Zustand in einen Formhohlraum, das in Einspritzlängsrichtung (X) aufweist:
- eine starre Matrize (1) mit einer Vorderseite (10), die teilweise den Formhohlraum (4) eingrenzt, einer Rückseite (11) und zumindest einem longitudinalen Durchgang (12), der die Matrize von ihrer Rückseite (11) zu ihrer Vorderseite (10) durchsetzt,
- eine longitudinale Einspritzdüse, die koaxial im Inneren des Durchgangs (12) angeordnet ist und einen longitudinalen Kanal (20) aufweist,
- eine Ausgabevorrichtung (3) zum Versorgen des Kanals (20) der Düse mit thermoplastischem Material im fließfähigen Zustand, die hinter der Rückseite (11) der Matrize (1) liegt und mechanisch mit dieser verbunden ist, wobei die Ausgabevorrichtung (3) einen longitudinalen Versorgungskanal (30) aufweist, der nach vorne mündet,
wobei die Düse zwei Teile enthält, die in dichter Weise gleitbeweglich zueinander sind,
- wobei das erste Teil einen Düsenkörper (2) aufweist, von dem ein vorderer Bereich (21) auf der Matrize (1) mit Abstützung aufliegt,
- wobei das zweite Teil einen Verbindungsring (61) aufweist, der einen Durchgang (26) besitzt, in welchem der Düsenkörper (2) in dichter Weise gleiten kann, und eine Rückseite (60) in Gleitkontakt an der Vorderseite der Ausgabevorrichtung aufweist,
und ein elastisches Beaufschlagungsmittel (6), das mit den beiden Teilen zusammenwirkt, um den Düsenkörper (2) in Längsrichtung (X) nach vorne und den Verbindungsring (61) in Längsrichtung (X) nach hinten zu beaufschlagen, wobei das elastische Beaufschlagungsmittel (6) aufweist:
- ein erstes elastisches Glied (63), das so angeordnet ist, dass es den Verbindungsring (61) nach hinten beaufschlagt, und
- ein zweites elastisches Glied (64), das so angeordnet ist, dass es den Düsenkörper (2) nach vorne beaufschlagt, wobei das zweite elastische Glied (64) zwischen dem Verbindungsring (61) und einem fest mit dem Düsenkörper (2) verbundenen Abstützelement (65) angeordnet ist,
wobei das System **dadurch gekennzeichnet ist, dass** die Einspritzdüse eine Mutter (67) aufweist, die auf den Verbindungsring (61) aufgeschraubt ist und dabei das zweite elastische Glied (64) umgibt, wobei die Mutter (67) von dem ersten elastischen Glied (63) nach hinten beaufschlagt wird.

3. System nach Anspruch 2, **dadurch gekennzeichnet, dass** das vordere Ende (21) der Düse mit einer Schulter (25) an einem kreisrunden Dichtungsring (5) unter Abstützung flach aufliegt.

4. System nach einem der Ansprüche 2 oder 3, wobei
- das erste elastische Glied (63) zwischen der Rückseite (11) der Matrize (1) und dem Verbindungsring (61) so angeordnet ist, dass es an dem Verbindungsring (61) eine longitudinale Reaktion nach hinten gewährleistet,
- das Abstützelement (65) eine Abstützscheibe (65) ist, die starr mit dem Düsenkörper (2) verbunden ist,
- das zweite elastische Glied (64) zwischen dem Verbindungsring (61) und der Abstützscheibe (65) so angeordnet ist, dass es an der Abstützscheibe (65) eine longitudinale Reaktion nach vorne gewährleistet.

5. System nach einem der Ansprüche 2 bis 4, **dadurch gekennzeichnet, dass** bei Raumtemperatur die Achse des Kanals (30) der Ausgabevorrichtung quer zur Achse des Kanals (20) der Düse versetzt ist, und zwar um einen Abstand, der im Wesentlichen gleich der Querausdehnung der Ausgabevorrichtung ist, wenn sie von der Raumtemperatur auf die Einspritztemperatur gebracht wird, so dass beim Einspritzen die Kanäle (30, 20) der Ausgabevorrichtung (3) und der Düse (2) koaxial verlaufen.

## Claims

1. A nozzle for injecting thermoplastic material in the fluid state, comprising two portions sliding in sealed fashion with respect to one another,
- the first portion comprising a nozzle body (2) which, in a longitudinal direction of injection (X), comprises a longitudinal channel (20) through which the thermoplastic material passes,
- the second portion comprising a linking ring (61) having a passage (26) in which the nozzle body is able to slide in sealed manner,
and resilient load means (6) cooperating with the two portions to urge the nozzle body (2) in the forward longitudinal direction (X) and the linking ring (61) in the backward longitudinal direction (X), said resilient load means (6) comprising:
- a first elastic member (63) arranged so as to urge the linking ring (61) backwards, and
- a second elastic member (64) arranged so as to urge the nozzle body (2) forwards, said second elastic member (64) being arranged between the linking ring (61) and a support element (65) secured to the nozzle body (2),
said injection nozzle being **characterized in that** it comprises a nut (67) screwed onto the linking ring (61) by surrounding the second elastic member (64), said nut (67) being urged backwards by the first elastic member (63).

2. A system for injecting a thermoplastic material in the fluid state into a mould cavity which, with reference to a longitudinal direction (X) of injection, comprises:
- a rigid moulding die (1) having a front face (10) partly delimiting the mould cavity (4), a rear face (11) and at least one longitudinal passage (12) passing through the die from its rear face (11) to its front face (10),
- a longitudinal injection nozzle, arranged coaxially inside said passage (12), and comprising a longitudinal channel (20),
- a manifold (3) feeding the channel (20) of the nozzle with thermoplastic material in the fluid state, located behind the rear face (11) of the die (1) and mechanically connected thereto, said manifold (3) comprising a longitudinal feed channel (30) leading towards the front,
the nozzle comprising two portions which slide in sealed manner with respect to one another :
- the first portion comprising a nozzle body (2) of which a front region (21) bears upon the die (1),
- the second portion comprising a linking ring (61) having a passage (26) in which the nozzle body (2) is able to slide in sealed manner, and comprising a rear face (60) in sliding contact against the front face of the manifold,
and resilient load means (6) cooperating with the two portions to urge the nozzle body (2) in the forward longitudinal direction (X) and the linking ring (61) in the backward longitudinal direction (X), said resilient load means (6) comprising:
- a first elastic member (63) arranged so as to urge the linking ring (61) backwards, and
- a second elastic member (64) arranged so as to urge the nozzle body (2) forwards, said second elastic member (64) being arranged between the linking ring (61) and a support element (65) secured to the nozzle body (2),
said system being **characterized in that** the injection nozzle comprises a nut (67) screwed onto the linking ring (61) by surrounding the second elastic member (64), said nut (67) being urged backwards by the first elastic member (63).

3. System according to claim 2, **characterized in that** the front end (21) of the nozzle, via a shoulder (25), bears flat against an annular sealing ring (5).

4. System according to one of claims 2 or 3, wherein:
- the first elastic member (63) is arranged between the rear face (11) of the die (1) and the linking ring (61) so as to ensure, on said linking ring (61), a backward longitudinal reaction,
- the support element (65) is a support washer (65) rigidly connected to the nozzle body (2),
- the second elastic member (64) is arranged between said linking ring (61) and the support washer (65), so as to ensure on said support washer (65) a forward longitudinal reaction.

5. The system according to one of claims 2 to 4, **characterized in that** at ambient temperature, the axis of channel (30) of the manifold is offset transversally relative to the axis of channel (20) of the nozzle, by a distance substantially equal to the transverse expansion of the manifold when it is brought from ambient temperature to the injection temperature, so that at the time of injection the channels (30, 20) of the manifold (3) and of the nozzle (2) are coaxial.
